Europäisches Patentamt

European Patent Office

Office européen des brevets

(11) Veröffentlichungsnummer: **0 411 297 A2**

(19)

(12) **EUROPÄISCHE PATENTANMELDUNG**

(21) Anmeldenummer: 90111740.8

(22) Anmeldetag: 21.06.90

(51) Int. Cl.⁵: **B60H 1/26**

(30) Priorität: 29.07.89 DE 3925178

(43) Veröffentlichungstag der Anmeldung:
06.02.91 Patentblatt 91/06

(84) Benannte Vertragsstaaten:
**AT CH DE ES FR GB IT LI SE**

(71) Anmelder: **ROBERT BOSCH GMBH**
**Postfach 10 60 50**
**D-7000 Stuttgart 10(DE)**

(72) Erfinder: **Krautter, Gerhard**
**Böblinger Strasse 169**
**D-7000 Stuttgart 1(DE)**
Erfinder: **Andrae, Peter, Dipl.-Ing.**
**Lessingstrasse 29**
**D-7252 Weil der Stadt(DE)**
Erfinder: **Baerenwaldt, Uwe, Dipl.-Ing.**
**Kirchäcker 4**
**D-7149 Freiberg-Geisingen(DE)**

(54) **Vorrichtung zum Belüften von Räumen in Fahrzeugen.**

(57) Es wird eine Vorrichtung zum Belüften von Räumen in Fahrzeugen, insbesondere Fahrgasträumen von Kraftfahrzeugen, mit einer Gebläseeinheit (3) vorgeschlagen, die in eine Öffnung (2) eine zur Fahrzeugkarosserie gehörende Trageinheit (1) eingesetzt ist, wobei die Gebläseeinheit (3) an einem außen anliegenden Halteteil (6) befestigt und an der Außenseite mit einer separaten Schutzabdeckung (12) versehen ist. Die Belüftungsvorrichtung hat einen geschlossenen, langgestreckten Luftführungskanal (7), welcher über die Außenfläche des Tragelements (1) vorgezogen ist und aus einem durch die Schutzabdeckung (12) gebildeten Oberteil und einem mit diesem verbundenen, als Halteteil für die Gebläseeinheit (3) ausgebildeten Unterteil (6) besteht, welcher mit einem vorgegebenen Abstand von der Außenfläche des Tragelements (1) angeordnet und gegenüber der Öffnung (2) abgedichtet ist.

FIG.1

EP 0 411 297 A2

## VORRICHTUNG ZUM BELÜFTEN VON RÄUMEN IN FAHRZEUGEN

Stand der Technik

Die Erfindung geht aus von einer Vorrichtung zum Belüften von Räumen in Fahrzeugen nach der Gattung des Hauptanspruchs. Derartige Vorrichtungen dienen insbesondere dazu, den Aufenthalts- bzw. Fahrgastraum eines geparkten und der Sonneneinstrahlung ausgesetzten Wohnwagens oder Kraftfahrzeugs zu belüften, mit dem Ziel, die Raumtemperatur herabzusetzen. Durch die DE-OS 33 16 823 ist ein Lüfter für ein Kraftfahrzeug zur Entlüftung des Fahrgast-Innenraums bekannt, bei dem eine Gebläseeinheit mit Radial- oder Axiallüfter in einem an der Außenseite des Tragelements z.B. Fahrzeugdach oder Sonnenkippdach anliegenden, kapselförmigen Gehäuse untergebracht ist. Der Lüfter ragt in den Innenraum des Kraftfahrzeugs und ist dort durch eine weitere,mit der Außenkapsel verschraubten und mit Lüftungsschlitzen versehenen Kapsel abgedeckt. In der aus einem Stück bestehenden Außenkapsel ist ein gekrümmter Luftführungskanal mit verschließbarem Ausblasspalt ausgebildet. Der Durchmesser der Außenkapsel ist nur unwesentlich größer als die zum Einsetzen der Gebläseeinheit dienende Öffnung im Tragelement, was bedeutet, daß die bekannte Anordnung trotz des nach oben gekrümmten Luftführungskanals gegen Wassereintritt, insbesondere gegen den Eintritt von Schwallwasser, nicht ausreichend geschützt ist. Ähnliches gilt auch für die Lüfterbauart nach DE-OS 36 43 436, dessen als Tangential- bzw. Querstromgebläse ausgebildeter Lüfter in ein am Fahrzeugdach angeordnetes, sich quer zur Fahrzeug-Längsachse erstreckendes, einstückig ausgebildetes Lüftergehäuse eingebaut ist, dessen über der Dachebene liegender Ansaugstutzen dem Fahrzeugheck zugekehrt ist. Die Ansaugöffnung des Lüftergehäuses ist am unteren Rand durch eine über die Dachebene vorstehende, vom Lüftergehäuse selbst gebildete Wasserabweiskante begrenzt. Auch hier besteht wegen des geringen Abstands der Ansaugöffnung vom Lüfter die Gefahr des Eintritts von Schwallwasser, insbesondere dann, wenn die Öffnung im Interesse einer niedrigen Bauhöhe des Lüftergehäuses einen geringen Abstand von der Außenfläche des Fahrzeugdaches hat. Schließlich ist durch die DE-OS 29 43 970 ein Dachfenster, insbesondere für Wohnwagen, bekannt, bei dem in einer durch einen Rahmen begrenzten Öffnung mittig unterhalb einer als Schutzabdeckung dienenden, aufstellbaren und kippbaren Haube ein Ventilator angeordnet ist, der von mehreren, zu einem Entlüftungsspalt führenden, hohlen Tragarmen getragen wird, die zugleich Ausblaskanäle des Ventilators sind. Dadurch soll auch bei geschlossener Haube eine motorische Zwangsentlüftung gewährleistet werden.

Vorteile der Erfindung

Die erfindungsgemäße Belüftungsvorrichtung mit den kennzeichnenden Merkmalen des Anspruchs 1 fügt sich aufgrund ihrer schmalen, langgestreckten Form und der relativ geringen Bauhöhe harmonisch und unauffällig in das Erscheinungsbild des Fahrzeugs ein. Durch die deutliche Überdeckung der Öffnung des Tragelements und den zwischen der Außenfläche des Tragelements und dem Unterteil des Luftführungskanals befindlichen Flutraum gewährleistet die Anordnung einen optimalen Schutz gegen Wassereintritt in die Gebläseeinheit, und damit in den Fahrzeug-Innenraum.

Die Verwendung der Schutzabdeckung als Oberteil des Luftführungskanals erlaubt ferner eine freizügige, den jeweiligen Gegebenheiten anpaßbare äußere Formgebung der Belüftungsvorrichtung sowie eine problemlose Vormontage. Das Unterteil braucht lediglich um die Öffnung herum gegen das Tragelement abgedichtet zu werden. Dadurch reduziert sich die kritische Dichtlänge und ist weniger abhängig von nach außen zunehmenden Flächentoleranzen des Tragelements. Aufgrund dieser Eigenschaften eignet sich die vorgeschlagene Vorrichtung auch hervorragend zum nachträglichen Einbau in ein Fahrzeug.

Durch die in den Unteransprüchen enthaltenen Merkmale sind vorteilhafte Weiterbildungen und Verbesserungen der im Hauptanspruch angegebenen Vorrichtung möglich. Besonders vorteilhaft ist es, wenn die Schutzabdeckung als eine auf dem Tragelement aufsitzende, langgestreckte Haube ausgebildet ist, die an ihrem dem Fahrzeugheck zugekehrten Ende eine Lufteinlaßöffnung hat. Die Haube deckt die Gebläseeinheit und den Luftführungskanal nach außen hin vollständig ab und verleiht der Belüftungseinheit eine strömungsgünstige Form, insbesondere dann, wenn die in Fahrtrichtung weisende Stirnfläche der Haube als Windabweiser ausgebildet ist.

Die elektrische Stromversorgung der Gebläseeinheit erfolgt vorzugsweise durch Solarenergie. Hierzu ist an der Außenseite der Schutzabdeckung mindestens ein aus einer Vielzahl von Solarzellen bestehender Solarmodul angeordnet. Infolge der Größe und Formgebung der Schutzabdeckung steht zum Anbringen von Solarzellen eine relativ große Fläche zur Verfügung, so daß ohne weiteren, zusätzlichen Flächenbedarf ein Solarmodul mit einer den Erfordernissen entsprechenden, auch höheren Ansprüchen genügenden Ausgangsleistung installiert werden kann. Der Solarmodul ist vorteilhaft als eine in sich starre Baueinheit mit rechteckiger Form und gerundeten Ecken ausgebildet, die in eine Öffnung der Schutzabdeckung von außen her eingesetzt ist. Zur Abdichtung des Solarmoduls gegenüber der Abdeckung kann eine Gummidichtung oder eine Dichtmasse verwendet werden. Die vom Solarmodul gelieferte elektrische Energie kann entweder direkt in den Elektromotor der Gebläseeinheit eingespeist oder alternativ zur Erhaltungsladung einer Fahrzeugbatterie verwendet werden. Hierzu ist ein Anschlußteil zum wahlweisen Verbinden des Solarmoduls mit der Gebläseeinheit bzw. einem Stromsammler vorgesehen. Die Umschaltung kann automatisch über einen Spannungsfühler erfolgen, welcher bei Absinken der Batteriespannung unter einen vorgegebenen Wert die Energieversorgung der Gebläseeinheit ausschließlich auf Solarstrom legt.

Zeichnung

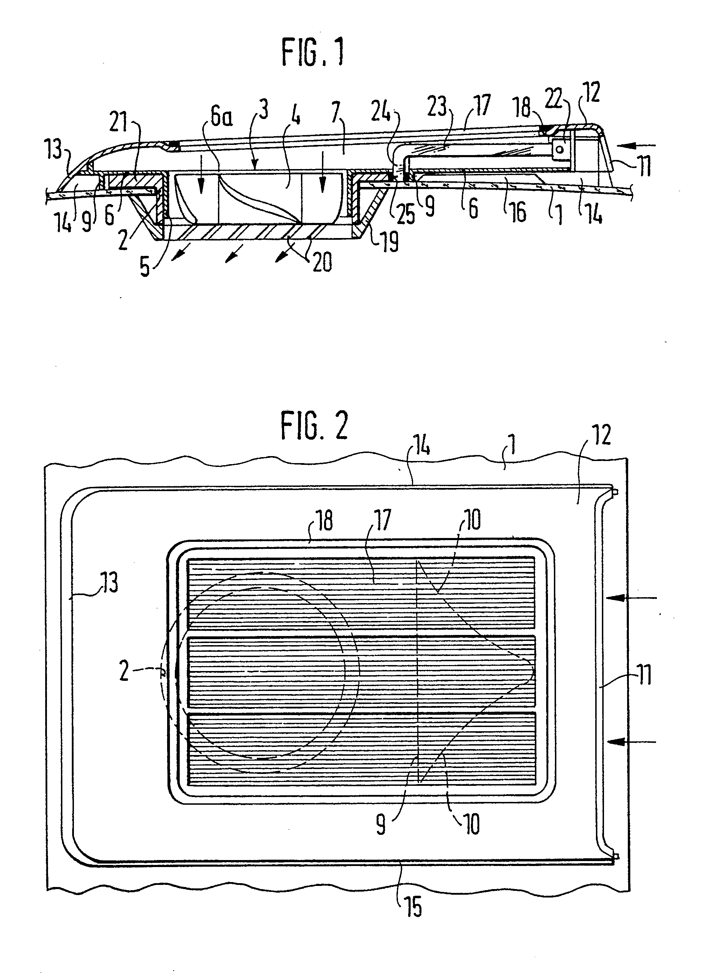

Ein Ausführungsbeispiel der Erfindung ist in der Zeichnung dargestellt und in der nachfolgenden Beschreibung unter Angabe weiterer Vorteile näher erläutert. Es zeigen Figur 1 eine in ein Sonnendach eines Kraftfahrzeugs eingebaute Belüftungsvorrichtung in einem Längsschnitt, Figur 2 die Vorrichtung nach Figur 1 in einer Draufsicht.

Beschreibung des Ausführungsbeispiels

Die nicht dargestellte Dachpartie eines Fahrzeugs, insbesondere eines Kraftfahrzeugs, hat ein rechteckförmiges Sonnendach 1, das eine dem Verlauf der Dachpartie angepaßte, leichte Krümmung nach außen aufweist. Das Sonnendach 1 überdeckt eine entsprechend ausgebildete Öffnung der Dachpartie und kann aus einer Schließstellung in eine Schrägstellung klappbar sein. Das Sonnendach 1 ist im Bereich seiner dem Kraftfahrzeugbug zugekehrten, vorderen Hälfte mit einer kreisförmig ausgebildeten Öffnung 2 versehen, in welche eine Gebläseeinheit 3 mit einem Axiallüfter 4 eingesetzt ist. Die Drehachse des von einem nicht dargestellten Elektromotor angetriebenen Lüfters verläuft annähernd vertikal zur Fahrzeugebene.

Die Gebläseeinheit 3 mit Lüfter 4 und Elektromotor ist in einem Zylinder 5 gelagert, welcher die kreisförmige Öffnung 2 des Sonnendachs 1 durchgreift. Der Zylinder 5 ist Bestandteil einer Platte 6, die das Unterteil eines langen, sich in Richtung des Kraftfahrzeughecks erstreckenden Luftführungskanals 7 bildet. Die Gesamtlänge des Luftführungskanals 7 entspricht im Ausführungsbeispiel etwa dem doppelten Durchmesser der Öffnung 2.

Das plattenförmige Unterteil 6 ist, wie aus Figur 1 ersichtlich, mit Abstand von der Oberfläche des Sonnendachs 1 angeordnet. Dieser Abstand ist durch einen an der Unterseite der Platte 6 angebrachten Rahmen 9 vorgegeben, welcher die Öffnung 2 des Sonnendachs umgibt und mit seiner Stirnfläche auf dem Sonnendach aufliegt. Die Stirnfläche des Rahmens 9 ist gegenüber dem Sonnendach 1 abgedichtet, um einen Wassereintritt in die Gebläsekammer, insbesondere während der Fahrt, zu verhindern.

Durch die Höhe des Rahmens 9 ist unterhalb des sich an die Öffnung 2 anschließenden Teils des Luftführungskanals 7 ein Flutraum geschaffen, der beträchtliche Mengen des bei starken Regenfällen, insbesondere beim Abbremsen des Fahrzeugs, anfallenden Schwallwassers aufnehmen und ableiten kann. Das Schwallwasser wird also nicht schon im Bereich der Lufteintrittsöffnung des Luftführungskanals durch eine dort angebrachte Barriere gestaut, sondern kann in den unterhalb der Platte 7 befindlichen Flutraum eintreten und von dort aus über das Sonnendach 1 abfließen. Um den Wasserabfluß zu beschleunigen und in bestimmte Bahnen zu lenken, können an der Unterseite der Platte 7 Wasserableitrippen 10 (Figur 2) angeordnet sein, die auf dem Sonnendach aufliegen und zusammen einen Keil bilden, dessen Spitze zur Lufteinlaßöffnung 11 des Luftführungskanals 7 und damit zum Fahrzeugheck gerichtet ist.

Die Platte ist innerhalb einer haubenförmig ausgebildeten Schutzabdeckung 12 angeordnet. Die beiden Teile 6, 12 sind im Inneren so ausgestaltet, daß sie zusammen den Luftführungskanal 7 bilden. Entlang der Außenkontur der Platte 6 erstreckt sich ein durchgehender, nach oben gerichteter, und vorzugsweise mit einer Nut versehener Steg, auf welcher die Schutzabdeckung 12 mit einem entsprechend geformten Innensteg aufliegt. Die Verbindung der Teile im Bereich der Stege erfolgt vorzugsweise durch Kleben. Dadurch ist eine Abdichtung des Luftführungskanals entlang der horizontal verlaufenden Trennlinie zwischen Ober- und Unterteil gewährleistet. Entsprechend der Rechteckform der Teile 6, 12 haben die Leisten, von oben gesehen, einen U-förmigen Verlauf, wobei die offene Seite des U der Lufteinlaßöffnung zugekehrt ist.

Die Haube 12 sitzt mit ihrer als Windabweiser geformten Stirnwand 13 und den beiden prallelen Seitenwänden 14, 15 auf der Oberfläche des Sonnendaches 1 auf. Wegen der im Dach 1 vorhandenen, erheblichen Formtoleranzen ist jedoch zwischen Dach und den Stirnseiten der Wände 13, 14, 15 keine Abdichtung vorgesehen.

Wie aus Figur 1 ersichtlich, haben die Seitewände 14, 15 im Bereich des Flutraums je eine langgestrecke Wasserabflußöffnung 16.

Zur Energieversorgung des Elektromotors der Gebläseeinheit 3 können Solarmodule 17 dienen, welche von der Abdeckhaube 12 getragen werden. Im Ausführungsbeispiel sind mehrere Solarmodule 17, von denen jedes eine Vielzahl von Solarzellen umfaßt, in eine an der Oberseite der Haube ausgebildete Ausnehmung eingesetzt und gegenüber der Haubenwand ringsum abgedichtet.

Die Solarmodule 17 sind über nicht dargestellte Leitungen mit dem Elektromotor der Gebläseeinheit 3 verbunden. Weitere Leitungen können von den Solarmodulen zu einem Stromsammler, beispielsweise einer Fahrzeugbatterie, führen. Der Leitungsverbund kann einen Umschalter enthalten, mittels dessen der von den Solarmodulen erzeugte Strom wahlweise dem Elektromotor der Gebläseeinheit oder dem Stromsammler zugeführt werden kann, wobei der Elektromotor über einen Schalter alternativ mit den Solarmodulen oder dem Stromsammler verbindbar ist. Die Umschaltung von Solarenergie auf Batterieenergie und umgekehrt erfolgt dabei vorzugsweise selbsttätig mittels eines im Stromkreis der Batterie angeordneten Spannungsfühlers, um eine zu starke Entladung der Batterie zu verhindern.

Die Befestigung der den Luftführungskanal 7 bildenden Teile erfolgt bei formstabilen Trageelementen, z.B. Glasdächern durch Verkleben des Distanzrahmens 9 der Platte 6 mit der Oberfläche des Tragelements 1. Bei formlabilen Trageelementen, beispielsweise dem Blech des Fahrzeugdaches, ist dagegen eine Schraubbefestigung vorzuziehen. Hierzu dient im Ausführungsbeispiel ein dem Distanzrahmen 9 der Platte 6 spiegelbildlich gegenüberliegendes Halteteil 19, das im Innenraum des Fahrzeugs angeordnet ist.

Bei beiden Befestigungsalternativen können an dem dem Fahrzeugheck zugekehrten Ende der Haube 12 zwei weitere Befestigungspunkte zum Stabilisieren vorgeshen sein.

Das Halteteil 19 ist im Ausführungsbeispiel aus Gründen des Insassenschutzes als energieabsorbierende Kapsel ausgebildet, an deren Unterseite verstellbare Strömungs-Leitelemente 20 zum gezielten Richten des von der Gebläseeinheit 3 erzeugten Blasluftstroms in bestimmte Raumbereiche angeordnet sind.

Zum Verstellen der Strömungsleitelemente 20 ist eine von innen betätigbare Drehhülse 21 vorgesehen. Diese sitzt zwischen dem die Gebläseeinheit 3 aufnehmenden Zylinder 5 der Platte 6 und der zur Aufnahme des Zylinders 5 vorgesehenen, kreisflächenförmigen Öffnung 2 des Sonnendachs 1.

Zusätzlich kann die Drehhülse 21 zum Verstellen einer im Bereich der Lufteinlaßöffnung 11 des Luftführungskanals 7 angeordneten Abdeckklappe 22 zwischen einer Offenstellung und einer Schießstellung ausgebildet sein. Die Klappe 22 ist vor allem dazu vorgesehen, um Windgeräusche und unerwünschte Zugluft während der Fahrt zu verhindern.

Die Verbindung zwischen Drehhülse 21 und Klappe 22 ist durch ein mechanisches Koppelelement in Form eines Schiebers 23 hergestellt, dessen abgewinkeltes Endstück 24 in einen Steuerschlitz 25 der Drehhülse eingreift. Der Steuerschlitz 25 ist so gestaltet, daß er in einer bestimmten Drehlage der Drehhülse 21 über den Schieber 23 ein Schließen der Klappe 22 veranlaßt.

Die Luftführung ist in Figur 1 durch Pfeile angedeutet. Die Außenluft tritt durch die Lufteinlaßöffnung in den Kanal 7 ein, und wird vom Lüfter 4 durch eine in der Platte 6 ausgebildete Öffnung 6a und die zwischen den Leitelementen 20 befindlichen Schlitze in den Innenraum geblasen. Die Strömungsrichtung kann selbstverständlich auch umgekehrt werden, so daß Luft aus dem Innenraum abgesaugt und nach außen geblasen wird.

## Ansprüche

1. Vorrichtung zum Belüften von Räumen in Fahrzeugen, insbesondere Fahrgasträumen in Kraftfahrzeugen, mit einer Gebläseeinheit, die in eine Öffnung eines zur Fahrzeugkarosserie gehörenden Tragelements eingesetzt ist, wobei die Gebläseeinheit an einem außen anliegenden Halteteil befestigt und an der Außenseite mit einer separaten Schutzabdeckung versehen ist, dadurch gekennzeichnet, daß die Gebläseeinheit einen in Richtung des Fahrzeughecks über die Außenfläche des Tragelements (1) vorgezogenen, langgestreckten Luftführungskanal (7) hat, welcher aus einem durch die Schutzabdeckung (12) gebildeten Oberteil und einem mit diesem fest verbundenen, als Halteteil für die Gebläseeinheit (3) ausgebildeten Unterteil (6) besteht, welches mit Abstand von der Außenfläche des Tragelements (1) angeordnet und gegenüber der Öffnung (2) abgedichtet ist.

2. Vorrichtung nach Anspruch 1, dadurch gekennzeichnet, daß das Unterteil (1) mit einem die Öffnung (2) des Tragelements (1) umschließenden Rahmen (9) an der Oberseite des Tragelements (1) aufliegt, der gegenüber dem Tragelement abgedichtet ist.

3. Vorrichtung nach Anspruch 1 oder 2, dadurch gekennzeichnet, daß am Unterteil (6) der Wasserableitung dienende, auf dem Tragelement (1) aufsitzende Rippen (10) angebracht sind.

4. Vorrichtung nach einem der vorhergehenden Ansprüche, dadurch gekennzeichnet, daß die Schutzabdeckung (12) als eine auf dem Tragelement (1) aufsitzende, langgestreckte Haube ausgebildet ist, die an ihrem dem Fahrzeugheck zugekehrten Ende einen Lufteinlaß hat.

5. Vorrichtung nach Anspruch 4, dadurch gekennzeichnet, daß die dem Fahrzeugbug zugekehrte Stirnwand (13) der Haube (12) als Windabweiser ausgebildet ist.

6. Vorrichtung nach einem der vorhergehenden Ansprüche, dadurch gekennzeichnet, daß zur Befestigung der den Luftführungskanal (7) bildenden Teile (6, 12) am Tragelement (1) die Schutzabdeckung (12) mit einem an der Innenseite des Tragelements (1) anliegenden Halteteil (19) verbunden, insbesondere verschraubt, ist.

7. Vorrichtung nach Anspruch 6, dadurch gekennzeichnet, daß der innen anliegende Halteteil (19) als energieabsorbierende Kapsel ausgebildet ist.

8. Vorrichtung nach Anspruch 7, dadurch gekennzeichnet, daß an der Unterseite der Kapsel (19) verstellbare Strömungs-Leitelemente (20) zum gezielten Richten des von der Gebläseeinheit (3) erzeugten Blasluftstroms in bestimmte Raumbereiche angeordnet sind.

9. Vorrichtung nach Anspruch 8, dadurch gekennzeichnet, daß zum Verstellen der Strömungs-Leitelemente (20) eine von innen betätigbare Drehhülse (21) dient, welche zwischen einem die Gebläseeinheit (3) aufnehmenden Zylinder (5) des Unterteils (6) und der zur Aufnahme des Zylinders vorgesehenen, kreisflächenförmigen Öffnung (2) des Tragelements (1) sitzt.

10. Vorrichtung nach Anspruch 9, dadurch gekennzeichnet, daß die Drehhülse (21) zum Verstellen eines im Bereich der Lufteinlaßöffnung (11) des Luftführungskanals (7) angeordneten Abdeckelements (22) zwischen einer Offenstellung und einer Schließstellung ausgebildet ist.

11. Vorrichtung nach einem der vorhergehenden Ansprüche, dadurch gekennzeichnet, daß an der Außenseite der Schutzabdeckung ein aus einer Vielzahl von Solarzellen bestehender Solarmodul (17) angeordnet ist.

12. Vorrichtung nach Anspruch 11, dadurch gekennzeichnet, daß der Solarmodul (17) als in sich starre Baueinheit ausgebildet und in eine an der Oberseite der Schutzabdeckung (12) angebrachte Öffnung eingesetzt ist.

13. Vorrichtung nach Anspruch 11 oder 12, gekennzeichnet durch einen Umschalter zum wahlweisen Verbinden des Solarmoduls (17) mit der Gebläseeinheit (3) bzw. einem Stromsammler.

14. Vorrichtung nach einem der vorhergehenden Ansprüche, dadurch gekennzeichnet, daß als Tragelement (1) für die Gebläseeinheit (3) und die den Luftführungskanal (7) bildenden Teile (6, 12) das Sonnendach eines Fahrzeuges dient.

# FIG. 1

# FIG. 2